## Europäisches Patentamt

## European Patent Office

## Office européen des brevets

(19)

(11) **EP 0 913 025 B1**

(12) **EUROPÄISCHE PATENTSCHRIFT**

(45) Veröffentlichungstag und Bekanntmachung des Hinweises auf die Patenterteilung:
**15.03.2000  Patentblatt 2000/11**

(21) Anmeldenummer: **97930250.2**

(22) Anmeldetag: **10.07.1997**

(51) Int Cl.$^7$: **H02M 3/335**

(86) Internationale Anmeldenummer:
**PCT/AT97/00164**

(87) Internationale Veröffentlichungsnummer:
**WO 98/02955 (22.01.1998 Gazette 1998/03)**

(54) **SCHALTNETZTEIL**

SWITCHED MODE POWER SUPPLY SYSTEM

BLOC D'ALIMENTATION A DECOUPAGE

(84) Benannte Vertragsstaaten:
**AT CH DE FR GB IT LI**

(30) Priorität: **15.07.1996  AT  127096**

(43) Veröffentlichungstag der Anmeldung:
**06.05.1999  Patentblatt 1999/18**

(73) Patentinhaber: **Siemens Aktiengesellschaft Österreich**
**1210 Wien (AT)**

(72) Erfinder:
• **WEINMEIER, Harald**
  **A-1210 Wien (AT)**
• **PÖTZELBERGER, Volker**
  **A-4020 Linz (AT)**

(74) Vertreter: **Matschnig, Franz, Dipl.-Ing.**
**Siebensterngasse 54**
**1070 Wien (AT)**

(56) Entgegenhaltungen:
**EP-A- 0 622 890          DE-A- 3 508 895**
**DE-A- 4 204 912**

## Beschreibung

Die Erfindung bezieht sich auf einen Schaltnetzteil mit einem Übertrager, der eine Primärwicklung und zumindest eine Sekundärwicklung sowie eine Hilfswicklung aufweist, mit einem über eine Ansteuerschaltung gesteuerten Schalter , über den die Primärwicklung an einer Eingangsgleichspannung liegt, mit einem der Sekundärwicklung nachgeschalteten Gleichrichter samt Siebmittel zur Erzeugung einer Ausgangsgleichspannung und mit einem Reglermittel zur Erzeugung einer ersten Stellgröße für die Ansteuerschaltung in Abhängigkeit von der Abweichung der Ausgangsspannung von einem ersten Sollwert, wobei das Tastverhältnis und/oder die Frequenz des Ansteuersignals des gesteuerten Schalters von der Stellgröße abhängt, sowie mit einem der Hilfswicklung nachgeschalteten Hilfsgleichrichter zur Erzeugung einer Hilfsgleichspannung für die Ansteuerschaltung bzw. andere Verbraucher.

Schaltnetzteile dieser Art werden in großem Ausmaß für industrielle Anwendungen gebraucht, wobei üblicherweise aus dem Wechselstromnetz durch Gleichrichtung eine sogenannte Zwischenkreisspannung gewonnen wird, die größenordnungsmäßig 325 Volt bis maximal 400 Volt beträgt. Diese Zwischenkreisspannung ist dann die Eingangsspannung des eigentlichen Schaltnetzteils.

In der Praxis ergibt sich oft der Wunsch nach Parallelschaltung mehrerer, im Prinzip gleichartiger Schaltnetzteile, sei es, weil man den Leistungsbedarf mit Hilfe mehrerer kleiner Geräte abdecken möchte, sei es, weil man, wegen eines später auftretenden höheren Leistungsbedarfes, eine bestehende Stromversorgung durch Hinzuschalten eines oder mehrerer weiterer Netzteile aufrüsten möchte.

Um eine Parallelschaltung mehrerer Netzgeräte zu gewährleisten, gibt es verschiedene Lösungsansätze:

- Man kann den Betriebszustand der einzelnen, parallel geschalteten Netzgeräte zentral, z.B. in einem Mikrokontroller, Rechner, PC oder dergleichen erfassen und steuern, oder es ist eine Master-Slave-Struktur aufgebaut, in der ein Gerät eine herausragende Stellung einnimmt.

- Die parallel geschalteten Geräte haben zwar keine Verbindung zu einer übergeordneten Einheit, sind jedoch gleichberechtigt und baugleich und verfügen über einen eigenen Informationskanal zum Datenaustausch, bzw. werden die Netzgeräte bei Installation der Parallelschaltung sorgfältig aufeinander abgeglichen.

- Die baugleichen, gleichberechtigten Geräte besitzen keine eigene Verbindung für den Informationsaustausch und werden auch nicht abgeglichen, um die Parallel-Schaltbarkeit zu ermöglichen. Solche Geräte sollen ohne jede Änderung für den Einzelbetrieb bzw. die Parallelschaltung eingesetzt werden können.

Die Erfindung bezieht sich auf den letztgenannten Fall und geht von der spezifischen Problematik aus, daß aufgrund von Bauteil- und Fertigungstoleranzen die einzelnen Netzgeräte unterschiedliche Leerlaufausgangsspannungen besitzen können bzw. werden. Schaltet man zwei Netzgeräte parallel, so gibt es bei Leerlauf und Teillast den Betriebszustand, daß das Gerät mit der höheren Ausgangsspannung bei Leerlauf die gemeinsame Ausgangsspannung bestimmt und bei Teillast auch den gesamten Laststrom übernimmt, und der Regler des zweiten Netzgerätes einen zu hohen Ist-Wert der Ausgangsspannung feststellt. Demgemäß versucht der Regler des Gerätes mit kleinerer Leerlaufausgangsspannung die Ausgangsspannung zu senken und er verringert das Tastverhältnis und/oder die Frequenz des gesteuerten Schalters, wodurch zwar - wegen der Parallelschaltung der Netzgeräte - nicht die Ausgangsspannung sinken kann, jedoch die Hilfsgleichspannung, welche die Ansteuerschaltung und allfällige andere Bauteile speist, so lange absinken wird, bis sie einen für die Stromversorgung der Ansteuerschaltung und gegebenenfalls anderer Schaltungen unzulässig niedrigen Wert erreicht, was zum völligen Abschalten der Schalt- und Steuerelektronik und somit zu einem "Stillegen" des Netzteiles führen kann. Falls sich die Stromversorgung in diesem Zustand befindet, d.h. bei einem Schaltnetzteil die Hilfsgleichspannung so niedrig ist, daß die Ansteuerschaltung und andere Elektronik/Logikteile abgeschaltet sind, und falls dann der solchermaßen abgeschaltete Schaltnetzteil z.B. wegen einer Lastveränderung Strom übernehmen muß, so ist zunächst ein Aufbauen der Hilfsgleichspannung erforderlich, damit die Ansteuerschaltung und der gesteuerte Schalter wieder in Betrieb gesetzt werden können. Dieser Vorgang benötigt eine gewisse Zeit, deren Dauer z.B. von der Größe eines Kondensators an der Hilfsgleichspannung und einem diesen Kondensator aus einer Zwischenkreisspannung aufladenden, relativ hochohmigen Hilfswiderstand bestimmt wird. Während dieser Zeit kann die Ausgangsspannung bei entsprechenden Lastverhältnissen einbrechen, sofern man nicht viel Aufwand in Pufferkondensatoren od. dgl. gelegt hat, wobei solche Einbrüche in kritischen Anwendungen äußerst unerwünscht sind, da sie z.B. zu Datenverlust führen können. Das gesagte gilt sinngemäß auch bei Parallelschaltungen von mehr als zwei Netzgeräten.

Aus der EP 0 585 789 A1 geht ein Schaltnetzteil hervor, bei welchem eine über eine Hilfswicklung und einen Hilfsgleichrichter erzeugte Hilfsgleichspannung über die Kollektor-Emitter-Strecke des Transistors eines Optokopplers der Ansteuerschaltung zugeführt wird. Die dort einlangende Spannung ändert sich demgemäß mit der Ausgangsgleichspannung und wird zur Regelung herangezogen. Die verwendete integrierte Schaltung für die Ansteuerschaltung ist dabei so ausgelegt, daß die solchermaßen schwankende Spannung auch zur Stromversorgung dienen. An eine Regelung dieser Spannung ist naturgemäß nicht gedacht und es würden demgemäß die oben genannten Probleme bei der Parallelschaltung mehrerer Netzgeräte auftreten.

Die EP 0 509 343 A2 offenbart einen Durchtluß-Schaltnetzteil, bei dem eine Hilfsgleichspannung für die Ansteuerschaltung verwendet wird, deren Herkunft nicht näher erläutert ist. Der Übertrager des Netzteiles besitzt drei Wicklungen, nämlich eine Primärwicklung, eine Sekundärwicklung sowie eine Abmagnetisierungswicklung mit einer Rückschlagdiode.

Der in der DE 35 08 895 A1 gezeigte Sperrwandler besitzt eine Regelung für zwei getrennte Ausgangsspannungen, welchen zwei Sekundärwicklungen des Übertragers zugeordnet sind. Eine Hilfsgleichspannung wird hier über einen nicht näher erläuterten Längsregler aus der Eingangsgleichspannung bezogen, wobei diese Regelung völlig unabhängig von der eigentlichen Regelung im Schaltnetzteil ist. Derartige Schaltungskonzepte sind insbesondere dann nicht zweckmäßig, wenn die Eingangsspannungen verhältnismäßig hoch sind, z. B. $230 \cdot \sqrt{2}$ Volt. Die Hilfsgleichspannung liegt nämlich lediglich in der Größenordnung von 10 Volt, sodaß die Gewinnung einer Hilfsgleichspannung ohne Hilfswicklung des Transformators energieverzehrend ist. Die in dem Dokument geoffenbarte Schaltung weist dementsprechend auch keine Auswahlschaltung betreffend die Regelung der Hilfsgleichspannung bzw. die Regelung der Ausgangsspannung auf.

Eine Aufgabe der Erfindung liegt daher darin, bei einem Schaltnetzteil der gegenständlichen Art, d.h. bei einem solchen, bei dem die Hilfsgleichspannung für die Ansteuerschaltung und eventuell andere Logikschaltungen mit einem Hilfsgleichrichter über eine Hilfswicklung des Übertragers erzeugt wird, eine Möglichkeit anzugeben, um ein ungewolltes Absinken der Hilfsgleichspannung und damit verbundenes Stillegen der Ansteuerschaltung bzw. weiterer Schaltungsteile bei Parallelschaltung mehrerer Schaltnetzteile zu verhindern.

Diese Aufgabe wird mit einem Schaltnetzteil der klassifizierten Art gelöst, der erfindungsgemäß durch einen Hilfsregler zur Erzeugung einer zweiten Stellgröße für die Ansteuerschaltung in Abhängigkeit von der Abweichung der Hilfsgleichspannung von einem zweiten Sollwert sowie durch eine Auswahlschaltung zur bevorzugten Zuführung der Stellgröße jenes Reglers an die Ansteuerschaltung, dessen Ist-Wert unterhalb des zugehörigen Sollwertes liegt, gekennzeichnet ist.

Falls es bei parallel geschalteten Schaltnetzteilen zu dem vorhin beschriebenen Betriebszustand kommt, bei dem ein Regler mit niedrigerer Ausgangsleerlaufspannung zufolge einer Parallelschaltung die Ausgangsspannung herunterregeln möchte, kann dies nur bis zu einem Punkt geschehen, bei dem die Hilfsgleichspannung bis zu einem vertretbaren Mindestwert absinkt. Sodann wird die Regelung von dem Hilfsregler übernommen, der nun über die Ansteuerschaltung für die Aufrechterhaltung der Hilfsgleichspannung sorgt. Dieser Zustand ändert sich erst, wenn die gemeinsame Ausgangsspannung durch Belastung unter ihren Soll-Wert sinkt, wodurch der Ausgangsspannungsregler wieder in Aktion tritt und der Hilfsregler in den Hintergrund gelangt.

Weitere Merkmale der Erfindung sind in den abhängigen Ansprüchen gekennzeichnet.

Die Erfindung samt weiterer Vorteile ist im folgenden anhand beispielsweiser Ausführungsformen näher erläutert, die in der Zeichnung veranschaulicht sind. In dieser zeigen

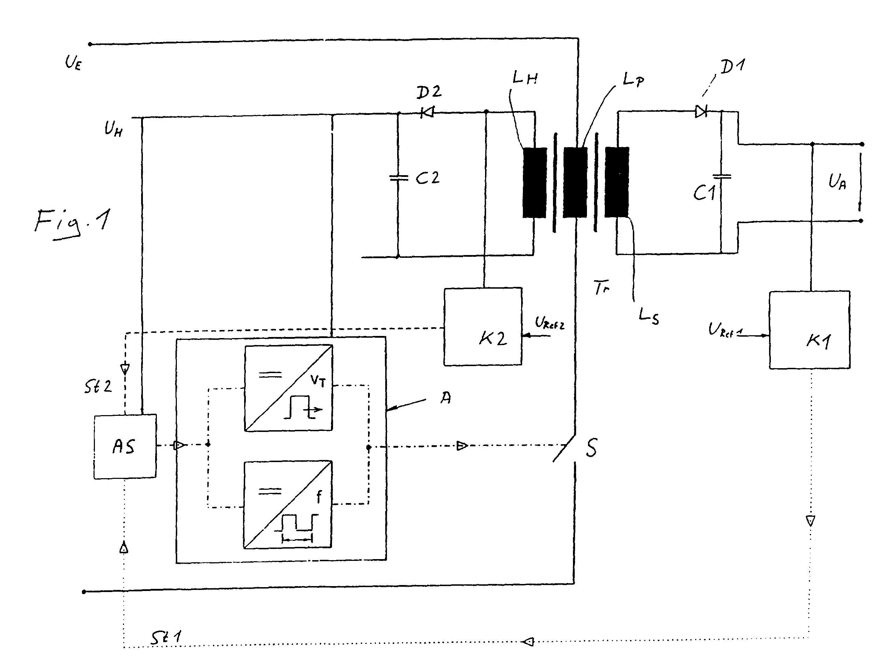

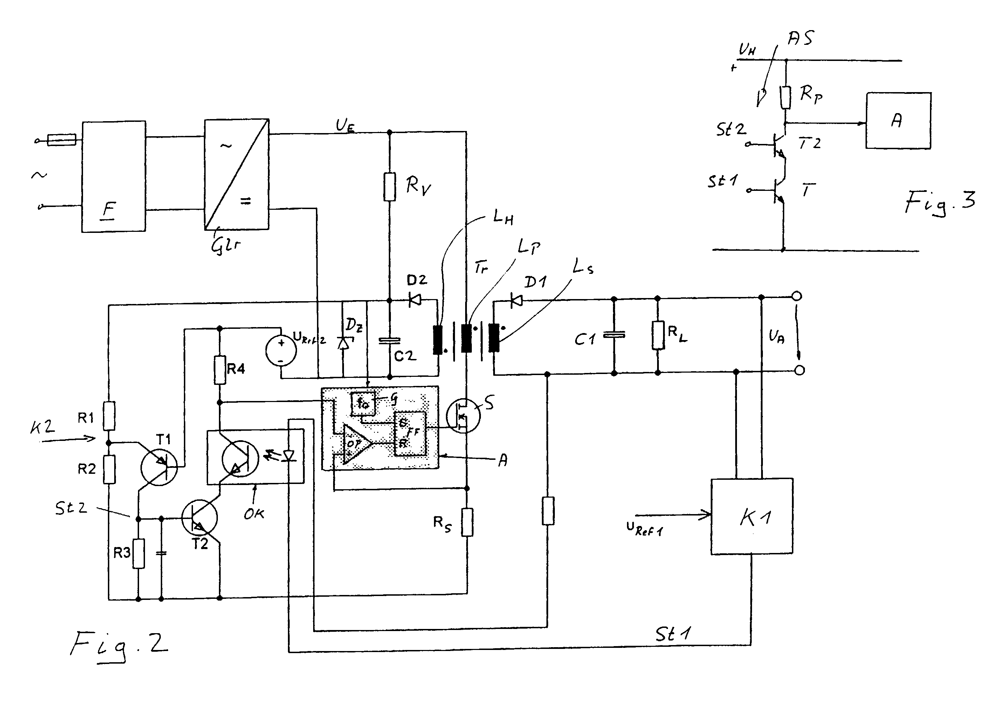

Fig 1 ein Blockschaltbild einer möglichen Ausführungsform der Erfindung, Fig. 2 ein mehr ins Detail gehendes Schaltbild einer Ausführungsform der Erfindung und Fig. 3 das bei der Ausführung nach Fig. 2 angewendete Prinzip der Auswahlschaltung.

Der in Fig. 1 dargestellte Schaltnetzteil besitzt einen Übertrager Tr mit einer Primärwicklung Lp, eine Sekundärwicklung $L_S$ sowie eine Hilfswicklung $L_H$, wobei die Primärwicklung Lp über einen gesteuerten Schalter S an einer Eingangsgleichspannung $U_E$ liegt. Der Schalter S, im vorliegenden Beispiel ein N-Kanal-FET-Transistor wird über eine Ansteuerschaltung A gesteuert, die in bekannter Weise Ansteuerimpulse an den Schalter S liefert, deren Tastverhältnis und/oder Folgefrequenz von der Höhe der Eingangsspannung der Ansteuerschaltung abhängt. Hinsichtlich Schaltungen dieser Art wird z.B. auf die EP 421 245 A2 und die dort in der Beschreibungseinleitung angegebene Literatur verwiesen.

Sekundärseitig sind der Sekundärspule $L_S$ ein Gleichrichter D1 und ein Ladekondensator C1 nachgeschaltet, an welchem die Ausgangsgleichspannung $U_A$ liegt. Die Ausgangsgleichspannung $U_A$ oder ein ihr proportionaler Teil wird in einem Regler K1 mit einer Referenzspannung $U_{Ref1}$ verglichen und der Ausgang des Reglers K1 wird als erste Stellgröße St1 dem Eingang einer Auswahlschaltung AS zugeführt, deren Ausgang mit dem Eingang der Ansteuerschaltung A verbunden ist.

Der Hilfswicklung $L_H$ des Übertragers Tr sind ein Gleichrichter D2 und ein Ladekondensator C2 nachgeschaltet, um eine Hilfsgleichspannung $U_H$ zu erhalten, welche zur Versorgung der Ansteuerschaltung A, der Auswahllogik AS und allfälliger anderer Logikerhaltungs-, Anzeigemitteln, etc. dient. Auch der Hilfsgleichspannung ist ein Regler, nämlich ein Hilfsregler K2 zugeordnet, der, ausgehend von einem Vergleich mit einer zweiten Referenzspannung $U_{Ref2}$, eine zweite Stellgröße St2 an die Auswahlschaltung AS liefert.

Die Funktion der Schaltung ist die folgende: Falls im normalen Betrieb durch Parallelschaltung des Netzteils mit einem oder mehreren anderen Netzteilen die Ausgangsspannung $U_A$ einen höheren Wert als ihren Sollwert annimmt, versucht der Regler K1 die Ausgangsspannung zu senken, d.h. er verringert über die Ansteuerschaltung A das Tastverhältnis und/oder die Frequenz des Ausgangssignals der Ansteuerschaltung A, wodurch auch die Hilfsgleichspannung $U_H$ absinkt. Der Hilfsregler K2, der einen ständigen Vergleich der Hilfsgleichspannung $U_H$ mit einem Sollwert, nämlich $U_{Ref2}$ durchführt, gibt daher ein entsprechendes Signal an die Auswahlschaltung AS ab. Diese ist so aufgebaut, daß sie nun erkennt, daß bei dem Hilfsregler K2 der Ist-Wert unterhalb des Sollwertes liegt, und daß sie daher die Stellgröße 2 unter weitgehender Vernachlässigung der Stellgröße St1 des Reglers K1 an die Ansteuerschaltung A zuführt, sodaß der Regelkreis ausschließlich oder fast ausschließlich primärseitig in der Form $L_H$ - D2, C2 - K2 - AS - A - S - $L_P$ vorliegt. Die Hilfsgleichspannung $U_H$ wird somit auf einem Sollwert gehalten, unter den sie nicht absinken kann.

Falls sich der Lastzustand am Ausgang des Netzteils wieder ändert, d.h. UA zu fallen beginnt, tritt für den Regler K1 der Zustand ein, daß sein Ist-Wert kleiner als der Sollwert ist und eine dementsprechende Stellgröße St1 tritt am Ausgang des Reglers K1 auf. Die Auswahllogik erkennt diesen Zustand und leitet nun die Stellgröße Stl an die Ansteuerschaltung A, wobei die Stellgröße St2 vernachlässigt bzw. weitgehend vernachlässigt wird. Der Regelkreis liegt somit wieder in der Form $L_P$ - D1, D1 - K1 - AS - A - S - $L_P$ vor.

Bei der Ausführung nach Fig. 2 werden für gleiche Teile wie in Fig. 1 gleiche Bezugszeichen verwendet bzw. werden diese Teile und ihre Funktion nicht nochmals erwähnt. Die Eingangsspannung $U_E$ wird aus dem Wechselspannungsnetz mittels eines einem Filter F nachgeschaltetem Gleichrichters Glr als sogenannte Zwischenkreisspannung erzeugt, typischerweise in der Größe von 325 V. Der Kondensator C2, an dem die Hilfsgleichspannung $U_H$ liegen soll, wird über einen hochohmigen Widerstand $R_V$ auf eine durch eine Zenerdiode $D_Z$ begrenzte Spannung aufgeladen, um ein "Anlaufen" der Schaltung bei Anschalten an das Netz zu ermöglichen. Es sei an dieser Stelle erwähnt, daß $R_V$ für eine Versorgung der Ansteuerschaltung bzw. anderen Schaltungen nicht dimensioniert ist. Die notwendige Spannungsteilung von z.B. 325 V auf z.B. 24 V würde bei den im Betrieb auftrendenden Strömen zu einer unerwünscht hohen Verlustwärme an $R_V$ führen.

Die Ansteuerschaltung A ist hinsichtlich ihrer Schaltung nur angedeutet, sie enthält ein von einem Taktgeber G und einem Operationsverstärker OP gesteuertes Flip-Flop FF. Der invertierende Eingang der Verstärker OP bildet den Eingang der Ansteuerschaltung und dem nicht invertierenden Eingang ist das Ausgangssignal eines Stromführers $R_S$. Soweit entspricht die Schaltung dem Stand der Technik wie z.B. weiter oben angegeben.

Die Hilfsgleichspannung $U_H$ bzw. ein Teil davon wird mit der Referenzspannung $U_{Ref2}$ verglichen, die zwischen Minuspol von $U_H$ und der Basis eines pnp-Transistors T1 liegt. Der Emitter dieses Transistors T1 liegt an einem Spannungsteiler R1/R2, der Kollektorwiderstand ist mit R3 bezeichnet. Der Kollektor des Transistors T1 ist mit der Basis eines npn-Transistors T2 verbunden, der mit seinem Emitter dem Minuspol der Hilfsgleichspannung $U_H$ liegt. Der Kollektor des Transistors T2 ist über die Emitter-Kollektor-Strecke des npn-Transistors eines Optokopplers OK und einem zu letzterem gehörenden Kollektorwiderstand R4 mit dem Plus-Pol der Referenzspannung $U_{ref2}$ verbunden.

Die Leuchtdiode des Optokopplers OK wird von dem Ausgang des Reglers Kl gespeist und parallel zu dem Kondensator C1 liegt ein Widerstand $R_L$ zur Erzeugung einer Grundlast am Ausgang des Netzteils.

Wenn nach dem Einschalten der Netzspannung die Spannung an dem Kondensator C2 hoch genug ist, beginnt die Ansteuerschaltung A zu takten, wobei sichergestellt sein muß, daß die Referenzspannung $U_{ref2}$ bereits vorhanden ist. Die Hilfsversorgungsspannung $U_H$ speist nun die Ansteuerschaltung A, die Transistoren sowie eventuell andere, hier nicht gezeigte Logik- oder Anzeigebausteine, wobei die Leistung fast ausschließlich über die Wicklung $L_H$ (und nicht über $R_V$) eingespeist wird.

Der Spannungsteiler R1/R2 ist so dimensioniert, daß der Transistor Tl dann leitet, wenn die Hilfsgleichspannung $U_H$ die zum Betrieb der Verbraucher erforderliche Höhe überschritten hat. Wenn der Transistor T1 leitet, ist auch der Transistor T2 voll durchgesteuert, sodaß er dementsprechend eine weitgehend konstante Sättigungsspannung zwischen Kollektor und Emitter besitzt. Das z.B. für die Pulsbreite verantwortliche Signal am Kollektor des Optokopplers OK - das Eingangssignal der Ansteuerschaltung A - hängt demnach weitestgehend nur von der Kollektor-Emitter-Spannung des Optokopplertransistors und somit von der Stellgröße St1 ab. Dieser Betriebszustand wird von dem Netzteil in allen Betriebsbedingungen beibehalten - mit Ausnahme der Parallelschaltung bei erhöhter Ausgangsspannung, was im folgenden erläutert wird.

Wird ein Netzteil ausgangsseitig mit einem (oder mehreren) Netzteil(en) parallelgeschaltet, das (die) eine höhere Leerlaufausgangsspannung aufweist (aufweisen), so erkennt das Netzteil mit niedrigerer Ausgangsspannung bei Leerlauf oder Teilbelastung des gemeinsamen Ausganges einen zu hohen Ist-Wert der Ausgangsspannung, wodurch über den Regler 1 und die Stellgröße St1 der Transistor des Optokopplers OK durchgesteuert wird. In der Folge sperrt die Ansteuerschaltung A durch Herabsetzung von Tastverhältnis und/oder Frequenz den Schalter S vollständig oder fast vollständig. Die an der Hilfsgleichspannung $U_H$ liegenden Verbraucher, wie die Ansteuerschaltung A, entladen nun C2 bis - wegen des Überwiegens von $U_{ref2}$ - der Transistor T1 sperrt und über die Stellgröße St2 und den Transistor T2 die Regelung übernommen wird, wodurch die Hilfsgleichspannung $U_H$ auf einem festen Wert aufrechterhalten wird. Dieser Wert muß natürlich über der Abschaltschwelle der Ansteuerschaltung A liegen, andererseits unterhalb der bei Leerlauf auftretenden Hilfsgleichspannung. Außerdem ist ein Widerstand $R_L$ zur Erzeugung einer geringen Grundlast dem Kondensator Cl, d.h. dem Ausgang des Netzteils, parallelgeschaltet, da es anderenfalls - bei Fehlen jeglicher Last - im Leerlauf zu einer Überhöhung der Ausgangsspannung kommen könnte.

Das bei der Schaltung nach Fig. 2 verwendete Auswahlprinzip ist kurz in Fig. 3 nochmals, weiter vereinfacht, dargestellt. Die Transistoren T2 und T entsprechen den Transistoren T2 und dem Optokopplertransistor in Fig. 2, der Pull-Up-Widerstand $R_P$ entspricht im Prinzip dem Widerstand R4 der Fig. 2. Die beiden Stellgrößen St1 und St2 werden den Basen der Transistoren T2 und T zugeführt, der Kollektor des Transistors T2 ist mit dem Eingang der Ansteuerschaltung A verbunden. Wie in diesem Fall ist ganz allgemein kein Optokoppler erforderlich, wenn er auch, wegen der einfachen Potentialtrennung, zweckmäßig ist.

Es muß auch klar sein, daß im Rahmen der Erfindung andere Realisierungen der Auswahlschaltung möglich sind, die Gatterbaustein- oder Dioden- und Widerstands- bzw. Transistorlogiken verwenden.

**Patentansprüche**

1. Schaltnetzteil

   - mit einem Übertrager (Tr), der eine Primärwicklung ($L_P$) und zumindest eine Sekundärwicklung ($L_S$) sowie eine Hilfswicklung ($L_H$) aufweist,
   - mit einem über eine Ansteuerschaltung (A) gesteuerten Schalter (S), über den die Primärwicklung an einer Eingangsgleichspannung ($U_E$) liegt,
   - mit einem der Sekundärwicklung nachgeschalteten Gleichrichter (D1) samt Siebmittel (C1) zur Erzeugung einer Ausgangsleichspannung ($U_A$) und
   - mit einem Reglermittel (K1) zur Erzeugung einer ersten Stellgröße (St1) für die Ansteuerschaltung (A) in Abhängigkeit von der Abweichung der Ausgangsspannung von einem ersten Sollwert ($U_{Ref1}$), wobei das Tastverhältnis und/oder die Frequenz des Ansteuersignals des gesteuerten Schalters von der Stellgröße abhängt, sowie
   - mit einem der Hilfswicklung ($L_H$) nachgeschalteten Hilfsgleichrichter (D2; Glr) zur Erzeugung einer Hilfsgleichspannung ($U_H$) für die Ansteuerschaltung bzw. andere Verbrau cher,

   **gekennzeichnet durch**

   - einen Hilfsregler (K2) zur Erzeugung einer zweiten Stellgröße (St2) für die Ansteuerschaltung (A) in Abhängigkeit von der Abweichung der Hilfsgleichspannung ($U_H$) von einem zweiten Sollwert ($U_{Ref2}$), und

   - eine Auswahlschaltung (AS) zur bevorzugten Zuführung der Stellgröße jenes Reglers an die Ansteuerschaltung (A), dessen Ist-Wert unterhalb des zugehörigen Soll-Wertes liegt.

2. Schaltnetzteil nach Anspruch 1, **dadurch gekennzeichnet, daß** die erste Stellgröße (St1) der Auswahlschaltung (AS) über einen Optokoppler (OK) zugeführt wird.

3. Schaltnetzteil nach Anspruch 1 oder 2, **dadurch gekennzeichnet, daß** ein dem Hilfsgleichrichter (D2) nachgeschalteter Kondensator (C2) über einen an der Eingangsgleichspannung ($U_E$) liegenden Widerstand ($R_V$) aufladbar ist.

4. Schaltnetzteil nach einem der Ansprüche 1 bis 3, **dadurch gekennzeichnet, daß** die Auswahlschaltung zwei in Serie geschaltete Transistoren (T2, T) aufweist, wobei die beiden Stellgrößen (St1, St2) je den Transistoreingängen zugeführt sind, und das an einem beiden Transistoren gemeinsamen Widerstand ($R_P$; R4) auftretende Ausgangssignal der Auswahlschaltung der Ansteuerschaltung (A) zugefiihrt ist.

5. Schaltnetzteil nach Anspruch 2 und Anspruch 4, **dadurch gekennzeichnet, daß** einer der in Serie geschalteten Transistoren (T) der Transistor eines Optokopplers (OK) ist.

6. Schaltnetzteil nach einem der Ansprüche A1 bis 5, **dadurch gekennzeichnet, daß** dem Ausgang des Netzteils ein Widerstand ($R_L$) zur Erzeugung einer geringen Grundlast parallel geschaltet ist.

**Claims**

1. Switched mode mains power supply

   - having a transformer (Tr) which has a primary winding ($L_P$) and at least one secondary winding ($L_S$) and an auxiliary winding ($L_H$),
   - having a switch (S) controlled by a control circuit (A), which switch connects the primary winding to an input direct voltage ($U_E$),
   - having a rectifier (D1), connected downstream of the secondary winding, together with filtering means (C1) to produce an output direct voltage ($U_A$), and
   - having an adjustment means (K1) to produce a first adjustment variable (St1) for the control circuit (A) in dependence upon the deviation of the output voltage from a first desired value ($U_{Ref1}$), wherein the pulse duty ratio and/or the frequency of the control signal of the controlled switch is dependent upon the adjustment variable, and

- having an auxiliary rectifier (D2; Glr), connected downstream of the auxiliary winding ($L_H$), to produce an auxiliary direct voltage ($U_H$) for the control circuit or other consumers,

characterised by

- an auxiliary adjuster (K2) for producing a second adjustment variable (St2) for the control circuit (A) in dependence upon the deviation of the auxiliary direct voltage ($U_H$) from a second desired value ($U_{Ref2}$), and

- a selection circuit (AS) for preferential supply of the adjustment variable of that adjuster to the control circuit (A), the actual value of which adjuster lies below the associated desired value.

2. Switched mode mains power supply according to claim 1, characterised in that the first adjustment variable (St1) of the selection circuit (AS) is supplied via an optical coupler (OK).

3. Switched mode mains power supply according to claim 1 or 2, characterised in that a capacitor (C2) connected downstream of the auxiliary rectifier (D2) can be charged by means of a resistor ($R_V$) connected to the input direct voltage ($U_E$).

4. Switched mode mains power supply according to one of claims 1 to 3, characterised in that the selection circuit has two transistors (T2, T) connected in series, wherein the two adjustment variables (St1, St2) are supplied respectively to the transistor inputs, and the output signal produced at a resistor ($R_P$; $R_4$) common to both transistors is supplied to the selection circuit of the control circuit (A).

5. Switched mode mains power supply according to claim 2 and claim 4, characterised in that one of the transistors (T) connected in series is the transistor of an optical coupler (OK).

6. Switched mode mains power supply according to one of claims Al [sic] to 5, characterised in that a resistor ($R_L$) for producing a low base load is connected in parallel to the output of the mains power supply.

**Revendications**

1. Alimentation à découpage

- avec un transformateur (Tr) qui comporte un enroulement primaire ($L_P$) et au moins un enroulement secondaire ($L_S$) ainsi qu'un enroulement auxiliaire ($L_H$),

- avec un interrupteur (S) qui est commandé par l'intermédiaire d'un circuit de commande (A) et par l'intermédiaire duquel l'enroulement primaire se trouve à une tension continue d'entrée ($U_E$),

- avec un redresseur (D1) branché en aval de l'enroulement secondaire et avec des moyens de filtrage (C1) pour produire une tension continue de sortie ($U_A$),

- avec des moyens régulateurs (K1) pour produire une première grandeur réglante (St1) destinée au circuit de commande (A) en fonction de l'écart entre la tension de sortie et une première valeur de consigne ($U_{Ref1}$), le taux d'impulsions et/ou la fréquence du signal de commande de l'interrupteur commandé dépendant alors de la grandeur réglante,

- avec un redresseur auxiliaire (D2 ; Glr) branché en aval de l'enroulement auxiliaire ($L_H$) et destiné à produire une tension continue auxiliaire ($U_H$) pour le circuit de commande ou pour d'autres consommateurs,

caractérisée par

- un régulateur auxiliaire (K2) pour produire une deuxième grandeur réglante (St2) destinée au circuit de commande (A) en fonction de l'écart entre la tension continue auxiliaire ($U_H$) et une deuxième valeur de consigne ($U_{Ref2}$), et

- un circuit de sélection (AS) pour amener de façon préférée au circuit de commande (A) la grandeur réglante de celui des régulateurs dont la valeur réelle est inférieure à la valeur de consigne associée.

2. Alimentation à découpage selon la revendication 1, caractérisée par le fait que la première grandeur réglante (Stl) est envoyée au circuit de sélection (AS) par l'intermédiaire d'un coupleur optoélectronique (OK).

3. Alimentation à découpage selon la revendication 1 ou 2, caractérisée par le fait qu'un condensateur (C2) branché en aval du redresseur auxiliaire (D2) est chargeable par l'intermédiaire d'une résistance ($R_V$) se trouvant à la tension continue d'entrée ($U_E$).

4. Alimentation à découpage selon l'une des revendications 1 à 3, caractérisée par le fait que le circuit de sélection comporte deux transistors (T2, T) branchés en série, les deux grandeurs réglantes (St1, St2) étant envoyées chacune à une entrée de transistor et un signal qui apparaît au niveau d'une ré-

sistance ($R_P$; $R_4$) commune aux deux transistors étant envoyé au circuit de sélection du circuit de commande (A).

5.  Alimentation à découpage selon la revendication 2 et la revendication 4, caractérisée par le fait que l'un des transistors (T) branchés en série est le transistor d'un coupleur optoélectronique (OK).

6.  Alimentation à découpage selon l'une des revendications 1 à 5, caractérisée par le fait qu'une résistance ($R_L$) est branchée parallèlement en sortie de l'alimentation à découpage afin de produire une petite charge de base.

Fig.1

Fig. 3

Fig. 2